# EUROPEAN PATENT APPLICATION

(11) **EP 4 082 688 A1**
(43) Date of publication of application: **02.11.2022**
(21) Application number: 20906970.7
(22) Date of filing: 17.12.2020
(51) Int. Cl.: B22C 7/02, B22C 9/04, B29C 64/124, B29C 64/135, B29C 64/314, B33Y 70/00, C08F 220/30, C08F 290/06

(54) **THREE-DIMENSIONAL MODELING PATTERN MATERIAL, CURED PRODUCT, CUBIC MOLDED ARTICLE, AND METHOD FOR PRODUCING MOLD BY USING SAID CUBIC MOLDED ARTICLE**

(30) Priority: 23.12.2019 JP 2019231479
(71) Applicant: DIC Corporation, Tokyo 174-8520 (JP)
(72) Inventor: HARA, Yujiro, Ichihara-shi, Chiba 290-8585 (JP); YOSHIZAWA, Masakazu, Ichihara-shi, Chiba 290-8585 (JP); IGAWA, Kosuke, Ichihara-shi, Chiba 290-8585 (JP); OSHIO, Atsushi, Ichihara-shi, Chiba 290-8585 (JP)
(74) Representative: TBK
(86) International application number: PCT/JP2020/047076
(87) International publication number: WO 2021/131994

(57) **Abstract**

An object of the present invention is to provide a three-dimensional pattern material capable of forming a cured product having excellent hardness and castability, a cured product, a cubic molded article, and a method for producing a mold by using the cubic molded article. A three-dimensional modeling pattern material is used that contains a curable resin composition containing a (meth)acrylate compound (A) represented by Structural Formula (1) and an aliphatic (meth)acrylate compound (B), the three-dimensional modeling pattern material having a content of the (meth)acrylate compound (A) of 50% by mass or more in a total mass of the (meth)acrylate compound (A) and the (meth)acrylate compound (B).

## Description

### Technical Field

The present invention relates to a three-dimensional modeling pattern material, a cured product, a cubic molded article, and a method for producing a mold by using the cubic molded article.

### Background Art

In recent years, as a method for producing resin molded products, a method of optical cubic modeling (a method of optical modeling) has been used, in which based on cubic shape data designed by a cubic design system such as three-dimensional CAD, a curable resin composition is selectively polymerized and cured with active energy rays such as an ultraviolet laser to produce cubic molded articles. This method of optical cubic modeling has come to be widely used in the production of prototype models of industrial products as well as resin-molded products because it can handle complex shapes, which are difficult to produce by cutting, has a short manufacturing time, and is easy to handle.

A typical example of the method of optical cubic modeling is a method of irradiating a liquid photocurable resin kept in a container with computer-controlled spot-shaped ultraviolet laser light from above to cure one layer of a certain thickness, lowering the molded article by one layer to supply the liquid resin on top of the layer, performing irradiation curing with the ultraviolet laser light in the same manner as described above to stack a layer, and repeating this operation to obtain a cubic molded article. Recently, in addition to the above pointillism method using the spot-shaped ultraviolet laser, the planar exposure method has been increasing, in which using a light source other than the laser such as a light emitting diode (LED), ultraviolet light is applied from below through a transparent container keeping a photocurable resin via a planar drawing mask called a digital micromirror device (DMD), in which a plurality of digital micromirror shutters are placed in a planar manner, to cure one layer with a certain sectional shape pattern, the molded article is pulled up by one layer, the next one layer is subjected to irradiation curing in the same manner as described above, and successive stacking is performed to obtain a cubic molded article.

In recent years, in metal casting, in place of the conventional lost wax method, a method has been considered, in which, with a cubic molded article of a photocurable resin obtained by the method of optical cubic modeling as an evaporative pattern, the cubic molded article is heated with the surrounding area covered with gypsum or the like to evaporate the cubic molded article and to produce a mold formed of gypsum or the like (refer to PTL 1, for example). However, to evaporate the cubic molded article used as the evaporative pattern, it is required to be heated at a high temperature, causing a problem, for example, in that the volume expansion of the cubic molded article causes cracks in the surrounding gypsum or the like. In addition, there has been a problem, for example, in that residues remain during evaporation, making it impossible to obtain a mold of an intended shape.

Thus, there has been a demand for a material having excellent curability and capable of forming a cured product with excellent castability.

### Citation List

### Patent Literature

PTL 1: WO 2016/125758

### Summary of Invention

### Technical Problem

An object of the present invention is to provide a three-dimensional pattern material capable of forming a cured product having excellent hardness and castability, a cured product, a cubic molded article, and a method for producing a mold by using the cubic molded article. Solution to Problem

To achieve the above object, the inventors of the present invention have conducted intensive studies to find out that the above object can be achieved by using a three-dimensional pattern material containing a curable resin composition containing a specific (meth)acrylate compound and an aliphatic (meth)acrylate compound, the cured product containing the specific (meth)acrylate compound in a specific amount and to complete the present invention.

That is to say, the present invention relates to a three-dimensional modeling pattern material containing a curable resin composition containing a (meth)acrylate compound (A) represented by Structural Formula (1) below and an aliphatic (meth)acrylate compound (B), the three-dimensional modeling pattern material having a content of the (meth)acrylate compound (A) of 50% by mass or more in a total mass of the (meth)acrylate compound (A) and the

(meth)acrylate compound (B), a cured product, a cubic molded article, and a method for producing a mold by using the cubic molded article. 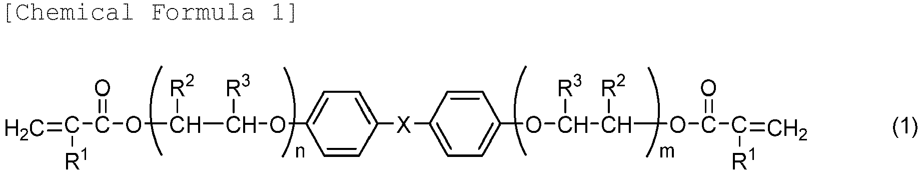 in Formula (1), R¹s are each independently a hydrogen atom or a methyl group; R²s are each independently a hydrogen atom or a methyl group; R³s are each independently a hydrogen atom or a methyl group; X is -O-, -SO₂-, a structure represented by Structural Formula (2) below, or a structure represented by Structural Formula (3) below; m is 0 or an integer of 1 to 30; n is 0 or an integer of 1 to 30; and m + n is an integer of 10 or more: 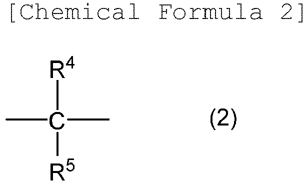 in Formula (2), R⁴ and R⁵ are each a hydrogen atom or a C₁₋₁₀ hydrocarbon group.

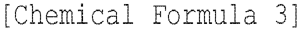

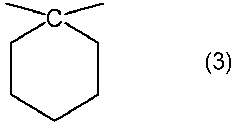

### Advantageous Effects of Invention

The cured product of the present invention has excellent hardness and has excellent castability and can thus be used for medical materials, composite resins, bonding materials, resin cements, resin blocks for CAD/CAM, and the like; among the medical materials, it can be suitably used for dental hard resin materials such as surgical guides for dental treatment, temporary teeth, bridges, and orthodontic appliances. In the present invention, "excellent castability" means that when, with a cubic molded article of a photocurable resin obtained by the method of optical cubic modeling as an evaporative pattern, the cubic molded article is heated with the surrounding area covered with an embedding material such as gypsum to evaporate the cubic molded article and to produce a mold formed of the embedding material such as gypsum, no cracks or fissures occur in the embedding material, and no or very few residues of the cured product and no or very little soot remain in the mold.

### Description of Embodiments

A three-dimensional modeling pattern material of the present invention contains a curable resin composition containing a (meth)acrylate compound (A) represented by Structural Formula (1) below and an aliphatic (meth)acrylate compound (B): 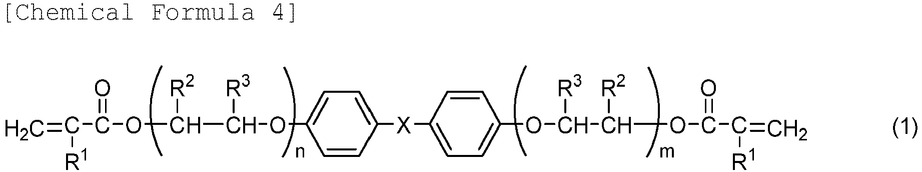 in Formula (1), R¹s are each independently a hydrogen atom or a methyl group; R²s are each independently a hydrogen atom or a methyl group; R³s are each independently a hydrogen atom or a methyl group; X is -O-, -SO₂-, a structure represented by Structural Formula (2) below, or a structure represented by Structural Formula (3) below; m is 0 or an integer of 1 to 30; n is 0 or an integer of 1 to 30; and m + n is an integer of 10 or more: 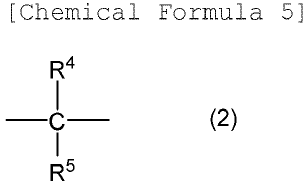 in Formula (2), R⁴ and R⁵ are each a hydrogen atom or a C₁₋₁₀ hydrocarbon group.

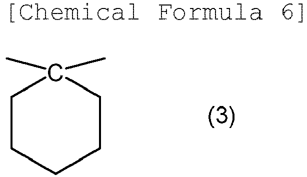

In the present invention, "(meth)acrylate" means acrylate and/or methacrylate. "(Meth)acryloyl" means acryloyl and/or methacryloyl. "(Meth)acrylic" means acrylic and/or methacrylic.

As the (meth)acrylate compound (A), a (meth)acrylate compound represented by Structural Formula (1) below is used. 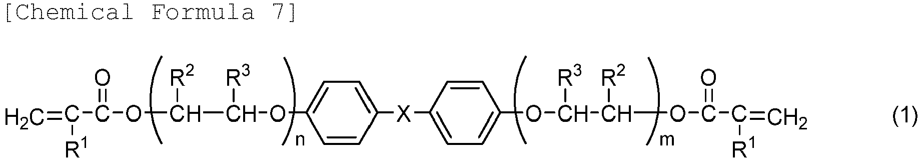 in Formula (1), R¹s are each independently a hydrogen atom or a methyl group; R²s are each independently a hydrogen atom or a methyl group; R³s are each independently a hydrogen atom or a methyl group; X is -O-, -SO₂-, a structure represented by Structural Formula (2) below, or a structure represented by Structural Formula (3) below; m is 0 or an integer of 1 to 30; n is 0 or an integer of 1 to 30; and m + n is an integer of 10 or more: 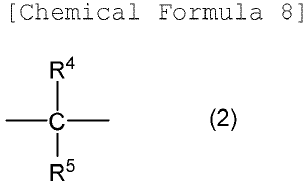 in Formula (2), R⁴ and R⁵ are each a hydrogen atom or a C₁₋₁₀ hydrocarbon group.

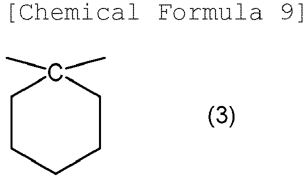

The content of the (meth)acrylate compound (A) is 50% by mass or more in the total mass of the (meth)acrylate compound (A) and the (meth)acrylate compound (B) and is more preferably in a range of 70% by mass to 90% by mass because of the capability of forming a three-dimensional modeling pattern material having excellent curability and castability.

Examples of the (meth)acrylate compound (B) include monofunctional acrylates such as methyl (meth)acrylate, ethyl (meth)acrylate, propyl (meth)acrylate, isopropyl (meth)acrylate, butyl (meth)acrylate, sec-butyl (meth)acrylate, isobutyl (meth)acrylate, 2-ethylbutyl (meth)acrylate, n-pentyl (meth)acrylate, hexyl (meth)acrylate, 2-ethylhexyl (meth)acrylate, heptyl (meth)acrylate, n-octyl (meth)acrylate, nonyl (meth)acrylate, dodecyl (meth)acrylate, 3-methylbutyl (meth)acrylate, isooctyl (meth)acrylate, lauryl (meth)acrylate, tridecyl (meth)acrylate, stearyl (meth)acrylate, isostearyl (meth)acrylate, neopentyl (meth)acrylate, hexadecyl (meth)acrylate, isoamyl (meth)acrylate, isobornyl (meth)acrylate, cyclohexyl (meth)acrylate, tricyclodecane (meth)acrylate, tetrahydrofurfuryl (meth)acrylate, and dioxane glycol (meth)acrylate;
bifunctional (meth)acrylates such as 1,6-hexanediol di(meth)acrylate, 1,4-butanediol di(meth)acrylate, 1,3-butylene glycol di(meth)acrylate, 1,9-nonanediol di(meth)acrylate, 1,10-decanediol di(meth)acrylate, neopentyl glycol di(meth)acrylate, ethylene oxide-modified 1,6-hexanediol di(meth)acrylate, neopentyl glycol hydroxypivalate di(meth)acrylate, propylene oxide-modified neopentyl glycol di(meth)acrylate, tripropylene glycol di(meth)acrylate, dipropylene glycol di(meth)acrylate, triethylene glycol di(meth)acrylate, tricyclodecane dimethanol di(meth)acrylate, tetraethylene glycol di(meth)acrylate, polyethylene glycol di(meth)acrylate, polypropylene glycol di(meth)acrylate, glycerol propylene oxide-modified tri(meth)acrylate, 2-hydroxy-3-acryloyloxypropyl (meth)acrylate, polytetramethylene glycol di(meth)acrylate, 3-methyl-1,5-pentanediol di(meth)acrylate, 2,3-[(meth)acryloyloxymethyl]norbornane, 2,5-[(meth)acryloyloxymethyl]norbornane, 2,6-[(meth)acryloyloxymethyl]norbornane, 1,3 adamantyl di(meth)acrylate, 1,3-bis[(meth)acryloyloxymethyl]adamantane, tris(hydroxyethyl)isocyanurate di(meth)acrylate, 3,9-bis[1,1-dimethyl-2-(meth)acryloyloxyethyl]-2,4,8,10-tetraoxospiro[5.5]undecane, and dioxane glycol di(meth)acrylate;
trifunctional (meth)acrylates such as EO-modified glycerol tri(meth)acrylate, PO-modified glycerol tri(meth)acrylate, pentaerythritol tri(meth)acrylate, EO-modified phosphoric acid tri(meth)acrylate, trimethylolpropane tri(meth)acrylate, caprolactone-modified trimethylolpropane tri(meth)acrylate, HPA-modified trimethylolpropane tri(meth)acrylate, (EO)- or (PO)-modified trimethylolpropane tri(meth)acrylate, alkyl-modified dipentaerythritol tri(meth)acrylate, and tris(acryloxyethyl)isoleucine;
tetrafunctional (meth)acrylates such as ditrimethylolpropane tetra(meth)acrylate, pentaerythritol ethoxy tetra(meth)acrylate, and pentaerythritol tetra(meth)acrylate;
pentafunctional (meth)acrylates such as dipentaerythritol hydroxy penta(meth)acrylate and alkyl-modified dipentaerythritol penta(meth)acrylate; and
hexafunctional (meth)acrylates such as dipentaerythritol hexa(meth)acrylate. These aliphatic (meth)acrylate compounds (B) can be used alone or in combination of two or more. Among these, acrylate compounds having a bi- or more-functional (meth)acryloyl group are preferred because of the capability of obtaining a three-dimensional pattern material capable of forming a cured product having excellent hardness and castability.

As the curable resin composition, apart from the (meth)acrylate compound (A) and the aliphatic (meth)acrylate compound (B), other (meth)acrylate compounds other than the (meth)acrylate compound (A) and the aliphatic (meth)acrylate compound (B) can be used as needed. In this case, the total content of the (meth)acrylate compound (A) and the aliphatic (meth)acrylate compound (B) is preferably 80% by mass or more and more preferably 90% by mass or more in a curable component of the curable resin composition because of the capability of obtaining a three-dimensional pattern material capable of forming a cured product having excellent hardness and castability.

Examples of the other (meth)acrylate compounds include urethane (meth)acrylate and epoxy (meth)acrylate.

The urethane (meth)acrylate generally has a polyurethane chain formed by polycondensation of a polyisocyanate compound and a polyol compound. A (meth)acryloyl group or a (meth)acryloyloxy group may be introduced to both ends of this polyurethane chain.

Examples of the urethane (meth)acrylate include those obtained by a method of reacting a polyol compound and a polyisocyanate compound in a ratio where the isocyanate groups are in excess of the hydroxy groups to prepare a urethane resin with isocyanate groups at the molecular ends and then reacting this with a radical polymerizable monomer having a hydroxy group and a (meth)acryloyl group (or a (meth)acryloyloxy group).

For the reaction between the polyol compound and the polyisocyanate compound, the equivalent ratio [(NCO)/(OH)] of the hydroxy group (OH) of the polyol compound to the isocyanate group (NCO) of the polyisocyanate compound is preferably in a range of 1.5 to 2.

Examples of the polyol compound include polyols such as polyethylene glycol, polypropylene glycol, polytetramethylene glycol, ethylene glycol, diethylene glycol, triethylene glycol, polyethylene glycol, 1,3-propylene glycol, 1,2 propylene glycol, dipropylene glycol, tripropylene glycol, polypropylene glycol, neopentyl glycol, 1,3-butanediol, 2,3-butanediol, 1,4-butanediol, 1,6-hexanediol, 1,8-octanediol, 1,9-nonanediol, 1,10-decanediol, 2,2,4-trimethyl-1,3-pentanediol, 3-methyl-1,5-pentanediol, dichloroneopentyl glycol, dibromoneopentyl glycol, neopentyl glycol hydroxypivalate, cyclohexanedimethylol, 1,4-cyclohexanediol, an ethylene oxide adduct of hydroquinone, a propylene oxide adduct of hydroquinone, spiroglycol, tricyclodecane dimethylol, hydrogenated bisphenol A, and 1,6-hexanediol-based polycarbonate diols; polyester polyols obtained by condensing the polyols and α,β-unsaturated polycarboxylic acids, saturated polycarboxylic acids, or their acid anhydrides; and polyester polyols obtained by ring-opening polymerizing lactones such as β-propiolactone, β-butyrolactone, γ-butyrolactone, γ-valerolactone, δ-valerolactone, γ-caprolactone, and ε-caprolactone. These polyol compounds can be used alone or in combination of two or more.

Examples of the α,β-unsaturated polycarboxylic acids and their acid anhydrides that condense with the polyols to form polyester polyols include various α,β-unsaturated polycarboxylic acids such as maleic acid, fumaric acid, itaconic acid, citraconic acid, and chlorinated maleic acid and their anhydrides. Examples of the saturated polycarboxylic acids and their acid anhydrides that condense with the polyols to form polyester polyols include saturated polycarboxylic acids such as phthalic acid, tetrahydrophthalic acid, hexahydrophthalic acid, monochlorophthalic acid, dichlorophthalic acid, trichlorophthalic acid, HET acid, chlorendic acid, dimer acid, adipic acid, pimelic acid, succinic acid, alkenyl succinic acid, sebacic acid, azelaic acid, 2,2,4-trimethyl adipic acid, terephthalic acid, dimethyl terephthalic acid, sodium 2-sulfoterephthalate, potassium 2-sulfoterephthalate, isophthalic acid, sodium 5-sulfoisophthalate, potassium 5-sulfoisophthalate, ortho-phthalic acid, 4-sulfophthalic acid, 1,10-decamethylenedicarboxylic acid, muconic acid, oxalic acid, malonic acid, glutaric acid, hexahydrophthalic acid, and tetrabromophthalic acid and their anhydrides. These can be used alone or in combination of two or more.

Examples of the polyisocyanate compound include aliphatic diisocyanate compounds such as butane diisocyanate, hexamethylene diisocyanate, 2,2,4-trimethylhexamethylene diisocyanate, and 2,4,4-trimethylhexamethylene diisocyanate; alicyclic diisocyanate compounds such as norbornane diisocyanate, isophorone diisocyanate, hydrogenated xylylene diisocyanate, and hydrogenated diphenylmethane diisocyanate; aromatic diisocyanate compounds such as tolylene diisocyanate, xylylene diisocyanate, tetramethylxylylene diisocyanate, diphenylmethane diisocyanate, 1,5-naphthalene diisocyanate, 4,4'-diisocyanato-3,3'-dimethylbiphenyl, and o-tolidine diisocyanate; polymethylene polyphenyl polyisocyanate having a repeating structure represented by Structural Formula (1) below; and isocyanurate-modified products, biuret-modified products, and allophanate-modified products thereof. These polyisocyanate compounds can be used alone or in combination of two or more.

For the reaction of the polyol compound and the polyisocyanate compound, a urethanation catalyst may be used as needed; examples of the urethanation catalyst include amines such as pyridine, pyrrole, triethylamine, diethylamine, and dibutylamine; phosphines such as triphenylphosphine and triethylphosphine; organotin compounds such as dibutyltin dilaurate, octyltin trilaurate, octyltin diacetate, dioctyltin diacetate, dioctyltin dineodecanoate, dibutyltin diacetate, tin octylate, and 1,1,3,3-tetrabutyl-1,3-dodecanoyl distannoxane; organometallic compounds such as zinc octylate and bismuth octylate; inorganic tin compounds such as tin octanoate; and inorganic metallic compounds. These urethanation catalysts can be used alone or in combination of two or more.

Examples of the radical polymerizable monomer having a hydroxy group and a (meth)acryloyl group include hydroxy group-containing (meth)acrylates such as hydroxyethyl (meth)acrylate, hydroxypropyl (meth)acrylate, hydroxyethyl vinyl ether, hydroxybutyl vinyl ether, pentaerythritol triacrylate, and isocyanuric acid ethylene oxide-modified diacrylate, ethylene oxide adducts of the hydroxy group-containing (meth)acrylates, propylene oxide adducts of the hydroxy group-containing (meth)acrylates, tetramethylene glycol adducts of the hydroxy group-containing (meth)acrylates, and lactone adducts of the hydroxy group-containing (meth)acrylates. These radical polymerizable monomers having a hydroxy group and a (meth)acryloyl group can be used alone or in combination of two or more.

Examples of the epoxy (meth)acrylate include those obtained by reacting an epoxy resin with (meth)acrylic acid or its anhydride.

Examples of the epoxy resin include bisphenol type epoxy resins, phenylene ether type epoxy resins, naphthylene ether type epoxy resins, biphenyl type epoxy resins, triphenylmethane type epoxy resins, phenol novolac type epoxy resins, cresol novolac type epoxy resins, bisphenol novolac type epoxy resins, naphthol novolac type epoxy resins, naphthol-phenol co-condensed novolac type epoxy resins, naphthol-cresol co-condensed novolac type epoxy resins, phenol-aralkyl type epoxy resins, naphthol-aralkyl type epoxy resins, dicyclopentadiene-phenol addition reaction type epoxy resins, biphenyl aralkyl type epoxy resins, fluorene type epoxy resins, xanthene type epoxy resins, dihydroxybenzene type epoxy resins, and trihydroxybenzene type epoxy resins. These epoxy resins can be used alone or in combination of two or more.

The method for producing the curable resin composition is not limited to a particular method; it may be produced by any method.

The curable resin composition can contain various additives such as photopolymerization initiators, UV absorbers, antioxidants, polymerization inhibitors, silicone-based additives, fluorine-based additives, silane coupling agents, phosphate compounds, organic fillers, inorganic fillers, rheology control agents, defoaming agents, and coloring agents as needed.

Examples of the photopolymerization initiators include 1-hydroxycyclohexyl phenyl ketone, 2-hydroxy-2-methyl-1-phenylpropan-1-one, 1-[4-(2-hydroxyethoxy)phenyl]-2-hydroxy-2-methyl-1-propan-1-one, thioxanthone and thioxanthone derivatives, 2,2'-dimethoxy-1,2-diphenylethan-1-one, 2,4,6-trimethylbenzoyl diphenylphosphine oxide, bis(2,4,6-trimethylbenzoyl)phenylphosphine oxide, 2-methyl-1-(4-methylthiophenyl)-2 morpholinopropan-1-one, and 2-benzyl-2-dimethylamino-1-(4-morpholinophenyl)-1-butanone. Among these, phosphorus compounds are preferred because of their excellent reactivity with (meth)acrylate compounds, the low amount of unreacted (meth)acrylate compounds in the resulting cured product, and the capability of obtaining a cured product having excellent biological safety; specifically, preferred are 2,4,6-trimethylbenzoyl diphenylphosphine oxide and bis(2,4,6-trimethylbenzoyl)phenylphosphine oxide. These photopolymerization initiators can be used alone or in combination of two or more.

Examples of commercially available products of the other photopolymerization initiators include "Omnirad-1173", "Omnirad-184", "Omnirad-127", "Omnirad-2959", "Omnirad-369", "Omnirad-379", "Omnirad-907", "Omnirad-4265", "Omnirad-1000", "Omnirad-651", "Omnirad-TPO", "Omnirad-819", "Omnirad-2022", "Omnirad-2100", "Omnirad-754", "Omnirad-784", "Omnirad-500", and "Omnirad-81" (manufactured by IGM), "Kayacure-DETX", "Kayacure-MBP", "Kayacure-DMBI", "Kayacure-EPA", and "Kayacure-OA" (manufactured by Nippon Kayaku Co., Ltd.), "Vicure-10" and "Vicure-55" (manufactured by Stauffer Chemical Company), "Trigonal P1" (manufactured by Akzo), "Sandoray 1000" (manufactured by Sandoz), "DEAP" (manufactured by APJOHN), "Quantacure-PDO", "Quantacure-ITX", and "Quantacure-EPD" (manufactured by Ward Blenkinsop & Co. Ltd.), and "Runtecure-1104" (manufactured by Runtec). Among these, "Omnirad-TPO" and "Omnirad-819" are preferred because of their excellent reactivity with (meth)acrylate compounds, the low amount of unreacted (meth)acrylate compounds in the resulting cured product, and the capability of obtaining a cured product having excellent biological safety.

As to the addition amount of the photopolymerization initiators, they are preferably used in an amount of 0.1% by mass or more and 4.5% by mass or less and are more preferably used in an amount in a range of 0.5% by mass or more and 3% by mass or less in the curable resin composition, for example.

The curable resin composition can also be improved in curability by further adding photosensitizers as needed.

Examples of the photosensitizers include amine compounds such as aliphatic amines and aromatic amines, urea compounds such as o-tolylthiourea, and sulfur compounds such as sodium diethyldithiophosphate and s-benzyl isothiuronium-p-toluenesulfonate.

Examples of the UV absorbers include triazine derivatives such as 2-[4-{(2-hydroxy-3-dodecyloxypropyl)oxy]-2-hydroxyphenyl]-4,6-bis(2,4-dimethylphenyl)-1,3,5-triazine and 2-[4-{(2-hydroxy-3-tridecyloxypropyl)oxy-2-hydroxyphenyl]-4,6-bis(2,4-dimethylphenyl)-1,3,5-triazine, 2-(2'-xanthene carboxy-5'-methylphenyl)benzotriazole, 2-(2'-o-nitrobenzyloxy-5'-methylphenyl)benzotriazole, 2-xanthene carboxy-4-dodecyloxybenzophenone, and 2-o-nitrobenzyloxy-4-dodecyloxybenzophenone. These UV absorbers can be used alone or in combination of two or more.

Examples of the antioxidants include hindered phenol-based antioxidants, hindered amine-based antioxidants, organosulfur-based antioxidants, and phosphate-based ester antioxidants. These antioxidants can be used alone or in combination of two or more.

Examples of the polymerization inhibitors include hydroquinone, methoquinone, di-t-butylhydroquinone, p-methoxyphenol, butylhydroxytoluene, and nitrosamine salts.

Examples of the silicone-based additives include polyorganosiloxanes having alkyl groups or phenyl groups such as dimethylpolysiloxane, methylphenylpolysiloxane, cyclic dimethylpolysiloxane, methylhydrogen polysiloxane, polyether-modified dimethylpolysiloxane copolymers, polyester-modified dimethylpolysiloxane copolymers, fluorine-modified dimethylpolysiloxane copolymers, and amino-modified dimethylpolysiloxane copolymers, polydimethylsiloxanes having polyether-modified acrylic groups, and polydimethylsiloxanes having polyester-modified acrylic groups. These silicone-based additives can be used alone or in combination of two or more.

Examples of the fluorine-based additives include the "Megaface" series manufactured by DIC Corporation. These fluorine-based additives can be used alone or in combination of two or more.

Examples of the silane coupling agents include vinyl-based silane coupling agents such as vinyl trichlorosilane, vinyl trimethoxysilane, vinyltriethoxysilane, 2-(3,4-epoxycyclohexyl)ethyltrimethoxysilane, 3-glycidoxypropyltrimethoxysilane, 3-glycidoxypropylmethyldiethoxysilane, 3-glycidoxypropyltriethoxysilane, p-styryltrimethoxysilane, 3-methacryloxypropylmethyldimethoxysilane, 3-methacryloxypropyltrimethoxysilane, 3-methacryloxypropylmethyldiethoxysilane, 3-methacryloxypropyltriethoxysilane, 3-acryloxypropyltrimethoxysilane, N-2-(aminoethyl)-3-aminopropylmethyldimethoxysilane, N-2-(aminoethyl)-3-aminopropyltrimethoxysilane, N-2-(aminoethyl)-3-aminopropyltriethoxysilane, 3-aminopropyltrimethoxysilane, 3-aminopropyltriethoxysilane, 3-triethoxysilyl-N-(1,3-dimethylbutylidene)propylamine, N-phenyl-3-aminopropyltrimethoxysilane, N-(vinylbenzyl)-2-aminoethyl-3-aminopropyltrimethoxysilane hydrochloride, special aminosilane, 3-ureidopropyltriethoxysilane, 3-chloropropyltrimethoxysilane, 3-mercaptopropylmethyldimethoxysilane, 3-mercaptopropyltrimethoxysilane, bis(triethoxysilylpropyl)tetrasulfide, 3-isocyanatepropyltriethoxysilane, allyltrichlorosilane, allyltriethoxysilane, allyltrimethoxysilane, diethoxy(methyl)vinylsilane, vinyltrimethoxysilane, vinyltriethoxysilane, and vinyltris(2-methoxyethoxy)silane;
epoxy-based silane coupling agents such as diethoxy(glycidyloxypropyl)methylsilane, 2-(3,4-epoxycyclohexyl)ethyltrimethoxysilane, 3-glycidoxypropyltrimethoxysilane, 3-glycidoxypropylmethyldiethoxysilane, and 3-glycidoxypropyltriethoxysilane;
styrene-based silane coupling agents such as p-styryltrimethoxysilane;
(meth)acryloxy-based silane coupling agents such as 3-methacryloxypropylmethyldimethoxysilane, 3-acryloxypropyltrimethoxysilane, 3-methacryloxypropyltrimethoxysilane, 3-methacryloxypropylmethyldiethoxysilane, and 3-methacryloxypropyltriethoxysilane;
amino-based silane coupling agents such as N-(2-aminoethyl)-3-aminopropylmethyldimethoxysilane, N-(2-aminoethyl)-3-aminopropyltrimethoxysilane, N-(2-aminoethyl)-3-aminopropyltriethoxysilane, 3-aminopropyltrimethoxysilane, 3-aminopropyltriethoxysilane, 3-triethoxysilyl-N-(1,3-dimethyl-butylidene)propylamine, and N-phenyl-3-aminopropyltrimethoxysilane;
ureido-based silane coupling agents such as 3-ureidopropyltriethoxysilane;
chloropropyl-based silane coupling agents such as 3-chloropropyltrimethoxysilane;
mercapto-based silane coupling agents such as 3-mercaptopropylmethyldimethoxysilane and 3-mercaptopropyltrimethoxysilane;
sulfide-based silane coupling agents such as bis(triethoxysilylpropyl)tetrasulfide; and
isocyanate-based silane coupling agents such as 3-isocyanatepropyltriethoxysilane. These silane coupling agents can be used alone or in combination of two or more.

Examples of the phosphate compounds include those having a (meth)acryloyl group in their molecular structures; examples of commercially available products include "Kayamer PM-2" and Kayamer "PM-21" manufactured by Nippon Kayaku Co., Ltd., "Light Ester P-1M", "Light Ester P-2M", and "Light Acrylate P-1A(N)" manufactured by Kyoeisha Chemical Co., Ltd., "SIPOMER PAM 100", "SIPOMER PAM 200", "SIPOMER PAM 300", and "SIPOMER PAM 4000" manufactured by SOLVAY, "Viscoat #3PA" and "Viscoat #3PMA" manufactured by Osaka Organic Chemical Industry Ltd., "New Frontier S-23A" manufactured by DKS Co. Ltd., and "SIPOMER PAM 5000" manufactured by SOLVAY, which is a phosphate compound having an allyl ether group in its molecular structure.

Examples of the organic fillers include solvent insoluble substances derived from plants such as cellulose, lignin, and cellulose nanofibers; and organic beads such as polymethyl methacrylate beads, polycarbonate beads, polystyrene beads, polyacrylic styrene beads, silicone beads, glass beads, acrylic beads, benzoguanamine-based resin beads, melamine-based resin beads, polyolefin-based resin beads, polyester-based resin beads, polyamide resin beads, polyimide-based resin beads, polyethylene fluoride resin beads, and polyethylene resin beads. These organic fillers can be used alone or in combination of two or more.

Examples of the inorganic fillers include inorganic particulates of silica, alumina, zirconia, titania, barium titanate, and antimony trioxide. These inorganic fillers can be used alone or in combination of two or more. The average particle size of the inorganic particulates is preferably in a range of 95 to 250 nm and in particular more preferably in a range of 100 to 180 nm.

When the inorganic particulates are contained, dispersion aids can be used. Examples of the dispersion aids include phosphate compounds such as isopropyl acid phosphate, triisodecyl phosphite, and ethylene oxide-modified phosphoric acid dimethacrylate. These dispersion aids can be used alone or in combination of two or more. Examples of commercially available products of the dispersion aids include "Kayamer PM-21" and "Kayamer PM-2" manufactured by Nippon Kayaku Co., Ltd. and "Light Ester P-2M" manufactured by Kyoeisha Chemical Co., Ltd.

Examples of the rheology control agents include amide waxes such as "Disparlon 6900" manufactured by Kusumoto Chemicals, Ltd.; urea-based rheology control agents such as "BYK 410" manufactured by BYK Chemie; polyethylene waxes such as "Disparlon 4200" by Kusumoto Chemicals, Ltd.; and cellulose acetate butyrates such as "CAB-381-2" and "CAB 32101" manufactured by Eastman Chemical Products.

Examples of the defoaming agents include oligomers containing fluorine or silicon atoms, higher fatty acids, and oligomers such as acrylic polymers.

Examples of the coloring agents include pigments and dyes.

As pigments, inorganic pigments and organic pigments that are known and customary can be used.

Examples of the inorganic pigments include titanium dioxide, antimony red, red iron oxide, cadmium red, cadmium yellow, cobalt blue, Prussian blue, ultramarine, carbon black, and graphite.

Examples of the organic pigments include quinacridone pigments, quinacridonequinone pigments, dioxazine pigments, phthalocyanine pigments, anthrapyrimidine pigments, anthanthrone pigments, indanthrone pigments, flavanthrone pigments, perylene pigments, diketopyrrolopyrrole pigments, perinone pigments, quinophthalone pigments, anthraquinone pigments, thioindigo pigments, benzimidazolone pigments, and azo pigments. These pigments can be used alone or in combination of two or more.

Examples of the dyes include azo dyes such as monoazo and disazo, metal complex salt dyes, naphthol dyes, anthraquinone dyes, indigo dyes, carbonium dyes, quinoneimine dyes, cyanine dyes, quinoline dyes, nitro dyes, nitroso dyes, benzoquinone dyes, naphthoquinone dyes, naphthalimide dyes, perinone dyes, phthalocyanine dyes, and triarylmethane-based dyes. These dyes can be used alone or in combination of two or more.

The three-dimensional modeling pattern material of the present invention contains the curable resin composition.

A cured product of the present invention can be obtained by irradiating the three-dimensional modeling pattern material containing the curable resin composition with active energy rays. Examples of the active energy rays include ultraviolet rays, electron beams, and ionizing radiation such as alpha rays, beta rays, and gamma rays. When ultraviolet rays are used as the active energy rays, they may be applied in an inert gas atmosphere such as nitrogen gas or applied in an air atmosphere in order to efficiently carry out a curing reaction by ultraviolet rays.

Ultraviolet lamps are generally used as a generation source of ultraviolet rays in terms of practicality and economy. Specific examples include low-pressure mercury lamps, high-pressure mercury lamps, ultrahigh-pressure mercury lamps, xenon lamps, gallium lamps, metal halide lamps, sunlight, and light-emitting diodes (LEDs). Among these, LEDs are preferred as the light source because of the capability of obtaining stable illumination over a long period of time.

The wavelength of the active energy rays is preferably in a range of 350 to 410 nm because of the capability of obtaining stable illumination.

The integrated light intensity of the active energy rays, which is not limited to a particular value, is preferably 50 to 50,000 mJ/cm² and more preferably 300 to 50,000 mJ/cm². The integrated light intensity being within the above range is preferred because the occurrence of uncured parts can be prevented or inhibited.

The irradiation with the active energy rays may be performed in one step or performed in two or more separate steps.

A cubic molded article of the present invention can be produced by a known method of optical cubic modeling.

Examples of the method of optical cubic modeling include the stereolithography (SLA) method, the digital light processing (DLP) method, and the inkjet method.

The stereolithography (SLA) method is a method in which a tank keeping a liquid curable resin composition is irradiated with active energy rays such as a laser beam at a point, and curing is performed layer by layer while a modeling stage is moved to perform cubic modeling.

The digital light processing (DLP) method is a method in which a tank keeping a liquid curable resin composition is irradiated with active energy rays such as an LED over a plane, and curing is performed layer by layer while a modeling stage is moved to perform cubic modeling.

The method of inkjet optical modeling is a method in which minute droplets of a curable resin composition for optical modeling are ejected through a nozzle to draw a certain shape pattern, which are then irradiated with ultraviolet light to form a cured thin film.

Among these methods of optical cubic modeling, the DLP method is preferred because it enables planar-based highspeed modeling.

The method of cubic modeling of the DLP method is not limited to a particular method so long as it is a method using an optical modeling system of the DLP method; because of good modeling accuracy of a cubic molded article, the modeling conditions are required to include an optical modeling stacking pitch in a range of 0.01 to 0.2 mm, an irradiation wavelength in a range of 350 to 410 nm, a light intensity in a range of 0.5 to 50 mW/cm², and an integrated light amount per layer in a range of 1 to 100 mJ/cm²; in particular, because of even better modeling accuracy of a cubic molded article, preferably included are an optical modeling stacking pitch in a range of 0.02 to 0.1 mm, an irradiation wavelength in a range of 380 to 410 nm, a light intensity in a range of 5 to 15 mW/cm², and an integrated light amount per layer in a range of 5 to 15 mJ/cm².

The cubic molded article of the present invention has excellent castability, and thus the cubic molded article preferably has a combustion rate in a nitrogen atmosphere at 450°C of 90% or more and preferably has a maximum expansion force from 25°C to 200°C of 10 MPa or less. In the present invention, the combustion rate is a value calculated by [(initial weight at 25°C - weight at each temperature)/(initial weight at 25°C)] by thermogravimetric differential thermal analysis (TG-DTA), whereas the maximum expansion force is a value calculated from the maximum value of [(storage modulus at each temperature) × (elongation rate at each temperature based on elongation at 25°C] at 25°C to 200°C.

The cubic molded article of the present invention can be used, for example, for automotive parts, aerospace-related parts, electric and electronic parts, building materials, interior decoration, jewelry, and medical materials, and can be suitably used for the applications of medical materials because it has excellent hardness and has excellent castability.

Examples of the medical materials include dental hard resin materials such as surgical guides for dental treatment, temporary teeth, bridges, and orthodontic appliances.

The cubic molded article of the present invention has excellent hardness and castability and is thus also suitable for the production of a mold using the cubic molded article.

Examples of the method for producing the mold include a method having Step (1) of partially or fully embedding the cubic molded article of the present invention with an embedding material, Step (2) of curing or solidifying the embedding material, and Step (3) of removing the cubic molded article by melting, decomposition, and/or incineration.

Examples of the embedding material include gypsum-based embedding materials and phosphate-based embedding materials; examples of the gypsum-based embedding material include silica embedding materials, quartz embedding materials, and cristobalite embedding materials.

Step (1) is a step of partially or fully embedding the cubic molded article of the present invention with the embedding material. In this process, the embedding material is preferably kneaded with an appropriate amount of water. When the water mixing ratio is too large, the curing time will be long, whereas when it is too small, the fluidity will be poor, making it difficult to pour the embedding material. It is preferable to apply a surfactant to the cubic molded article because the embedding material wets and adsorbs well, thus making it hard for the surface of a casting to be rough. Furthermore, when embedding the cubic molded article, it is preferable to embed it in such a manner that air bubbles do not adhere to the surface of the casting.

Step (2) is a step of curing or solidifying the embedding material. When a gypsum-based embedding material is used as the embedding material, the temperature for solidifying the embedding material is preferably in a range of 200 to 400°C, and it is preferably solidified after embedding the cubic molded article and leaving it at rest for about 10 to 60 minutes.

Step (3) is a step of removing the cubic molded article by melting, decomposition, and/or incineration. When the cubic molded article is removed by incineration, the firing temperature is preferably in a range of 400 to 1,000°C and more preferably in a range of 600 to 800°C.

A metallic casting of the present invention is obtained by pouring a metallic material into a mold obtained through Steps (1) to (3) and solidifying the metallic material [Step (4)]. Thus, the metallic casting corresponding to the prototype of the cubic molded article can be produced. Examples

The following specifically describes the present invention with reference to examples and comparative examples.

### (Example 1: Preparation of Three-Dimensional Modeling Pattern Material (1))

In a vessel equipped with a stirrer, 80 parts by mass of bisphenol A ethylene oxide-modified (10 mol addition) dimethacrylate, 20 parts by mass of neopentyl glycol dimethacrylate, and 2 parts by mass of a photopolymerization initiator ("Omnirad TPO" manufactured by IGM; 2,4,6-trimethylbenzoyl diphenylphosphine oxide) were mixed together, and the mixture was stirred and mixed together for 1 hour while controlling the liquid temperature to 60°C to dissolve it uniformly, thereby obtaining a three-dimensional modeling pattern material (1).

### (Examples 2 to 8: Preparation of Three-Dimensional Modeling Pattern Materials (2) to (8))

Three-dimensional modeling pattern materials (2) to (8) were obtained by the same method as in Example 1 based on the compositions and mixing ratios listed in Table 2.

### (Comparative Examples 1 to 6: Preparation of Three-Dimensional Modeling Pattern Materials (9) to (14))

Three-dimensional modeling pattern materials (9) to (14) were obtained by the same method as in Example 1 based on the compositions and mixing ratios listed in Table 2.

### (Example 9: Production of Cubic Modeled Article (E1))

The three-dimensional modeling pattern material (1) obtained in Example 1 was used to produce a cubic molded article (E1') using an optical modeling system of the digital light processing (DLP) method ("DLP Printer VITTRO" manufactured by 3Delight). In this process, the optical modeling stacking pitch was 0.05 to 0.1 mm, the irradiation wavelength was 380 to 390 nm, and the light irradiation time was 2 to 6 seconds per layer. After ultrasonically cleaning the cubic molded article (E1') in ethanol, it was post-cured using a post-curing apparatus equipped with an LED light source by performing light irradiation on the front face and the back face of the cubic molded article (E1') for 10 minutes each to obtain a desired cubic molded article (E1).

### (Examples 10 to 16: Production of Cubic Modeled Articles (E2) to (E8))

cubic molded articles (E2) to (E8) were obtained in the same manner as in Example 9 except that the three-dimensional modeling pattern materials (2) to (8) obtained in Examples 2 to 8 were used in place of the three-dimensional modeling pattern material (1) used in Example 9.

### (Comparative Examples 6 to 12: Production of Cubic Modeled Articles (C1) to (C5))

cubic molded articles (C1) to (C6) were obtained in the same manner as in Example 9 except that the three-dimensional modeling pattern materials (9) to (14) obtained in Comparative Examples 1 to 6 were used in place of the three-dimensional modeling pattern material (1) used in Example 9.

The following evaluations were conducted using the cubic molded articles (E1) to (E8) and (C1) to (C6) obtained in the examples and the comparative examples.

### [Method for Evaluating Hardness]

The cubic molded articles obtained in the examples and the comparative examples were measured according to the method of measurement described in JIS K 6253-3: 2012 "Rubber, vulcanized or thermoplastic - Determination of hardness - Part 3: Durometer method".

### [Method for Measuring Combustion Rate]

The cubic molded articles obtained in the examples and the comparative examples were crushed into 5 to 6 mg pieces, which were used as test pieces, and a mass reduction was measured when, using a simultaneous thermogravimetric and differential thermal analyzer (TG-DTA: TGA/DSC1 manufactured by Mettler Toledo), the temperature was raised from 25°C to 600°C at 10°C/minute in a nitrogen atmosphere to calculate a combustion rate at 450°C from [(initial weight at 25°C - weight at 450°C)/(initial weight at 25°C)].

### [Method for Measuring Maximum Expansion Force]

cubic molded articles of 1 mm thick, 5 mm wide, and 50 mm long were produced using the three-dimensional modeling pattern materials obtained in the examples and comparative examples, and the maximum expansion force was calculated from the maximum value of [(storage modulus at each temperature) × (elongation rate at each temperature based on elongation at 25°C] at 25°C to 200°C for the cubic molded articles. For the storage modulus, the measured values of storage modulus at 25°C to 200°C with a dynamic viscoelasticity measurement apparatus (DMA: "DMS6100" manufactured by Hitachi High-Tech Science Corporation) were used, whereas the elongation rate was calculated by an elongation rate at each temperature based on elongation at 25°C with a thermomechanical analyzer (TMA: "SS-6100" manufactured by Seiko Instruments Inc.). The maximum value of the product of both the values was taken as the maximum expansion force.

### [Methods for Evaluating Castability]

The cubic molded articles obtained in the examples and the comparative examples were embedded with an embedding material as a mixture of a cristobalite embedding material (Sakura Quick 30, Yoshino Gypsum Sales Co., Ltd.) and water at a mass ratio of 100:33 and were left at rest at 25°C for 30 minutes to solidify the embedding material. Then, each of the cubic molded articles and the embedding material were heated in an electric furnace heated at 700°C for 1 hour to incinerate the cubic molded article and to produce a mold. Castability in this process was evaluated through visual inspection in accordance with the following criteria. On the inside of the mold, the mold was cut to determine the presence or absence of cracks and fissures, the presence or absence of the residue of the cubic molded article or soot, and good or bad transferability of the cubic molded article to the mold through visual inspection.

O: There are no cracks or fissures on the outside and the inside of the mold, there is no residue of the cubic molded article or soot on the inside of the mold, and the transferability of the cubic molded article to the mold is good.

Δ: Although there are cracks or fissures on the inside of the mold, there are no cracks or fissures on the outside of the mold, there is no residue of the cubic molded article or soot on the inside of the mold, and the transferability of the cubic molded article to the mold is good.

X: At least one of cracks or fissures on the outside of the mold, the residue of the cubic molded article or remaining soot on the inside of the mold, and poor transfer of the cubic molded article to the mold occurs, thus showing unavailability as a mold.

Table 2 lists the compositions of the three-dimensional modeling pattern materials (1) to (8) prepared in Examples 1 to 8, the cubic molded articles (E1) to (E8) produced in Examples 9 to 16, the compositions of the three-dimensional modeling pattern materials (9) to (14) prepared in Comparative Examples 1 to 6, and evaluation results of the cubic molded articles (C1) to (C6) produced in Comparative Examples 7 to 12.

**[Table 1]**

| Table 1 | | | Ex. 1 | Ex. 2 | Ex. 3 | Ex. 4 | Ex. 5 | Ex. 6 | Ex. 7 | Ex. 8 | Comp. Ex. 1 | Comp. Ex. 2 | Comp. Ex. 3 | Comp. Ex. 4 | Comp. Ex. 5 | Comp. Ex. 6 |
|---|---|---|---|---|---|---|---|---|---|---|---|---|---|---|---|---|
| Three-dimensional modeling pattern material | | | (1) | (2) | (3) | (4) | (5) | (6) | (7) | (8) | (9) | (10) | (11) | (12) | (13) | (14) |
| A | Bisphenol A ethylene oxide-modified (10 mol addition) dimethacrvlate | Composition (part(s) by mass) | 80 | 80 | 60 | | 60 | 40 | 20 | 80 | 40 | | 100 | | | 40 |
| | Bisphenol A ethylene oxide-modified (30 mol addition) dimethacrvlate | | | | | 60 | 20 | 40 | 60 | | | | | 75 | | |
| A' | Bisphenol A ethylene oxide-modified (4 mol addition) dimethacrvlate | | | | | | | | | | | 80 | | 25 | | |
| B | NPG dimethacrvlate | | 20 | 20 | 40 | 40 | 20 | 20 | 20 | | 60 | 20 | | | | |
| | Dioxane glycol diacrvlate | | | | | | | | | 20 | | | | | 100 | 60 |
| C | Photopolymerization initiator | | 2 | 2 | 2 | 2 | 2 | 2 | 2 | 2 | 2 | 2 | 2 | 2 | 2 | 2 |
| D | Pigment | | | 0.1 | | | | | | | | | | | | |

**[Table 2]**

| Table 2 | | Ex. 9 | Ex. 10 | Ex. 11 | Ex. 12 | Ex. 13 | Ex. 14 | Ex. 15 | Ex. 16 | Comp. Ex. 7 | Comp. Ex. 8 | Comp. Ex. 9 | Comp. Ex. 10 | Comp. Ex. 11 | Comp. Ex. 12 |
|---|---|---|---|---|---|---|---|---|---|---|---|---|---|---|---|
| Cubic molded article | | (E1) | (E2) | (E3) | (E4) | (E5) | (E6) | (E7) | (E8) | (C1) | (C2) | (C3) | (C4) | (C5) | (C6) |
| Three-dimensional modeling pattern material | | (1) | (2) | (3) | (4) | (5) | (6) | (7) | (8) | (9) | (10) | (11) | (12) | (13) | (14) |
| Evaluation items | Hardness | 83 | 83 | 87 | 60 | 74 | 68 | 61 | 75 | 88 | 88 | 50 | 37 | 88 | 87 |
| | Combustion rate (%) | 96.1 | 95.7 | 94.6 | 95.5 | 96.3 | 96.5 | 97.0 | 90.2 | 91.8 | 87.5 | 96.0 | 96.6 | 55.9 | 72.1 |
| | Maximum expansion force (MPa) | 3.8 | 3.8 | 6.4 | 4.6 | 3.5 | 3.3 | 2.8 | 3.4 | 12 | 7.8 | 2.4 | 2.1 | 5.4 | 5.0 |
| | Castability | O | O | Δ | Δ | O | O | O | O | X | X | X | X | X | X |

## Claims

1. A three-dimensional modeling pattern material comprising a curable resin composition containing a (meth)acrylate compound (A) represented by Structural Formula (1) below and an aliphatic (meth)acrylate compound (B), the three-dimensional modeling pattern material having a content of the (meth)acrylate compound (A) of 50% by mass or more in a total mass of the (meth)acrylate compound (A) and the (meth)acrylate compound (B): 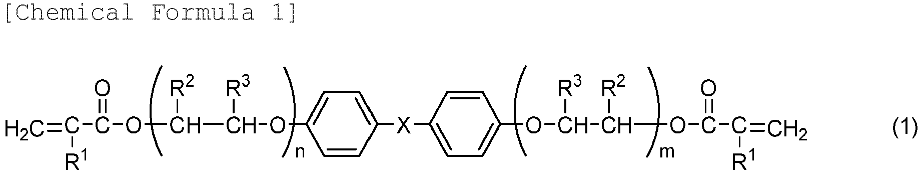 in Formula (1), R¹s are each independently a hydrogen atom or a methyl group; R²s are each independently a hydrogen atom or a methyl group; R³s are each independently a hydrogen atom or a methyl group; X is -O-, -SO₂-, a structure represented by Structural Formula (2) below, or a structure represented by Structural Formula (3) below; m is 0 or an integer of 1 to 30; n is 0 or an integer of 1 to 30; and m + n is an integer of 10 or more: 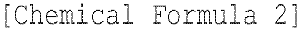 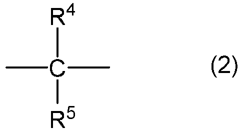 in Formula (2), R⁴ and R⁵ are each a hydrogen atom or a C₁₋₁₀ hydrocarbon group

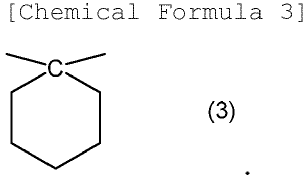

2. The three-dimensional modeling pattern material according to claim 1, wherein the curable resin composition further contains a photopolymerization initiator (C).

3. The three-dimensional modeling pattern material according to claim 1, wherein the curable resin composition further contains a pigment (D).

4. The three-dimensional modeling pattern material according to any one of claims 1 to 3, wherein the aliphatic (meth)acrylate compound (B) is an acrylate compound having a bi- or more-functional (meth)acryloyl group.

5. A cured product being a curing reaction product of the three-dimensional modeling pattern material according to any one of claims 1 to 4.

6. A cubic molded article comprising the cured product according to claim 5.

7. The cubic molded article according to claim 6, wherein the cubic molded article has a combustion rate of 90% or more in a nitrogen atmosphere at 450°C and a maximum expansion force from 25°C to 200°C of 10 MPa or less.

8. A method for producing a mold comprising:
Step (1) of partially or fully embedding the cubic molded article according to claim 6 or 7 with an embedding material;
Step (2) of curing or solidifying the embedding material; and
Step (3) of removing the cubic molded article by melting, decomposition, and/or incineration.

9. A method for producing a metallic casting, the method having Step (4) of pouring a metallic material into a mold obtained by the method of producing a mold according to claim 8 and solidifying the metallic material.
